# FASCICULE DE BREVET EUROPEEN

(11) **EP 2 345 828 B1**
(45) Date de publication et mention de la délivrance du brevet: **01.05.2013**
(21) Numéro de dépôt: 10290616.1
(22) Date de dépôt: 19.11.2010
(51) Int. Cl.: F16H 3/00, F16H 3/54, B60K 6/48, F16H 37/08

(54) **Dispositif de transmission à variation de vitesse pour groupe motopropulseur de véhicule automobile et véhicule autombile hybride utilisant un tel dispositif**
Getriebevorrichtung mit variablem Übersetzungsverhältnis und Hybridfahrzeug mit einer derartigen Vorrichtung
Transmission device with variable ratio for vehicle powertrain and hybrid vehicle using such a transmission

(30) Priorité: 14.01.2010 FR 1000128
(43) Date de publication de la demande: 20.07.2011
(73) Titulaire: IFP Energies nouvelles, 92852 Rueil-Malmaison Cedex (FR)
(72) Inventeur: Venturi, Stéhane, 07100 Roiffieux (FR)

(56) Documents cités:
- DE-A1-102007 033 418
- FR-A1- 2 670 440
- US-A- 5 607 369
- US-B1- 6 344 008

## Description

La présente invention se rapporte à un dispositif de transmission à variation de vitesse pour l'entraînement d'un véhicule automobile.

Elle concerne une application de ce dispositif de variation de vitesse à un véhicule automobile hybride.

Comme cela est déjà connu, ce type de véhicule comporte un groupe motopropulseur qui combine, comme mode d'entraînement (propulsion ou traction), un moteur thermique, généralement à combustion interne, et une machine électrique rotative reliée à une source électrique, telle qu'un ou plusieurs accumulateurs électriques ou batteries.

Cette combinaison permet d'optimiser les performances de ce véhicule, tant au niveau de la réduction des émissions de polluants dans l'atmosphère qu'au niveau de la diminution de la consommation en carburant.

Comme cela a été mieux décrit dans le brevet français N° 2 670 440, ce véhicule comporte un groupe motopropulseur avec un moteur thermique avec un dispositif de variation de vitesse et une machine électrique raccordée à une batterie électrique. Ce système comprend également deux embrayages, un premier embrayage entre le moteur thermique et la machine électrique et un deuxième embrayage entre la machine électrique et le dispositif de variation de vitesse.

Ainsi, lorsque l'on souhaite déplacer le véhicule avec un couple important sur une grande plage de vitesses tout en limitant la génération de gaz d'échappement et de bruit, comme dans un site urbain, l'utilisation de la machine électrique est privilégiée pour entraîner en déplacement ce véhicule.

Par contre, le moteur thermique est utilisé pour déplacer ce véhicule lors d'utilisations où une puissance d'entraînement élevée et une grande autonomie de fonctionnement sont demandées.

Ce système d'entraînement bien que donnant satisfaction présente néanmoins des inconvénients non négligeables.

En effet, lorsque seule la machine électrique est utilisée pour entraîner le véhicule, celle-ci doit posséder un couple suffisant non seulement pour entraîner le véhicule mais aussi pour vaincre toutes les résistances (inertie, frottement, ...) inhérentes au véhicule et au dispositif de variation de vitesse.

Il a été également proposé, notamment dans le brevet US 6 344 008, un véhicule hybride où une partie du dispositif de transmission à variation de vitesse comprend un train épicycloïdal avec une couronne, un planétaire et un porte-satellites. Ce document divulgue les caractéristiques du préambule de la revendication 1.

Dans ce type de train épicycloïdal, il est difficile de pouvoir contrôler le sens de rotation des différents éléments qui peut aller à l'encontre de celui qui est souhaité. Cela entraîne des efforts parasites et des couples résistants qui nuisent au bon fonctionnement de ce train épicycloïdal.

La présente invention se propose de remédier aux inconvénients ci-dessus mentionnés grâce à un dispositif de variation de vitesse simple et sure permettant d'obtenir le niveau de vitesse requis.

A cet effet, l'invention concerne un dispositif de transmission à variation de vitesse pour groupe motopropulseur de véhicule automobile comportant un train épicycloïdal avec un planétaire et une couronne reliés à l'arbre du moteur thermique dudit véhicule ainsi qu'un porte-satellites relié par une voie de transmission de mouvement à l'essieu moteur de ce véhicule, caractérisé en ce que le planétaire et la couronne sont reliés chacun à l'arbre du moteur par un accouplement à commande contrôlée et à une partie fixe du véhicule par un accouplement unidirectionnel.

Préférentiellement, l'accouplement unidirectionnel peut comprendre une roue libre.

L'accouplement à commande contrôlée peut comprendre un embrayage à friction dont le disque de friction est porté par l'arbre du moteur.

L'accouplement à commande contrôlée peut comprendre un embrayage à friction dont le disque de friction est porté par l'arbre du planétaire.

L'accouplement à commande contrôlée peut comprendre un embrayage à friction dont le disque de friction est porté par l'arbre de la couronne.

Le planétaire peut être relié à la partie fixe du véhicule par un accouplement unidirectionnel porté par un tourillon issu dudit planétaire.

Le planétaire peut être relié à la partie fixe du véhicule par un accouplement unidirectionnel porté par l'arbre de planétaire.

La couronne peut être reliée à la partie fixe du véhicule par un accouplement unidirectionnel porté par ladite couronne.

L'invention concerne également un procédé d'obtention de rapports de vitesse utilisant un dispositif de transmission qui peut consister à ne pas autoriser la rotation de la couronne dans aucun de ses deux sens de rotation et à commander le planétaire en un sens de rotation par l'accouplement entre l'arbre de moteur et ledit planétaire pour obtenir un rapport de vitesse entre ledit arbre de moteur et le porte-satellites.

Le procédé peut consister à ne pas autoriser la rotation du planétaire dans aucun de ses deux sens de rotation et à commander la couronne en un sens de rotation par l'accouplement entre l'arbre de moteur et la couronne pour obtenir un rapport de vitesse entre ledit arbre de moteur et le porte-satellites.

Le procédé peut consister à commander le planétaire en un sens de rotation par l'accouplement entre l'arbre de moteur et ce planétaire et à commander la couronne en un sens de rotation par l'accouplement entre l'arbre de moteur et la couronne pour obtenir un rapport de vitesse entre l'arbre de moteur et le porte-satellites.

L'invention concerne aussi un véhicule automobile de type hybride comprenant un groupe motopropulseur avec un dispositif de transmission à variation de vitesse qui peut comprendre une machine électrique raccordée électriquement à des accumulateurs électriques et dont le rotor est relié à la voie de transmission de mouvement.

La voie de transmission peut comprendre un actionneur porté à rotation par le rotor et permettant de relier le rotor de la machine au train épicycloïdal par une roue dentée et/ou à l'essieu moteur par une poulie dentée.

La voie de transmission peut comprendre un actionneur porté à rotation par le rotor et permettant de relier le rotor de la machine à l'essieu moteur par un pignon étagé.

L'actionneur peut permettre de relier le rotor au porte-satellites du train épicycloïdal.

L'actionneur peut permettre de relier le rotor de la machine à la couronne du train épicycloïdal.

La voie de transmission peut comprendre un pignon baladeur permettant de relier la roue dentée au train épicycloïdal et/ou à l'essieu moteur.

Le porte-satellites du train épicycloïdal peut porter une zone périphérique dentée pour coopérer avec le pignon baladeur.

La voie de transmission peut comprendre un pignon permettant de relier le plateau denté à l'essieu moteur.

La voie de transmission peut comprendre un pignon porté fixement par un fourreau comportant une roue dentée de transmission de rotation à l'essieu moteur.

Le fourreau peut comporter une portée périphérique dentée pour coopérer avec le pignon baladeur.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est un schéma montrant un dispositif de transmission à variation de vitesse selon l'invention appliqué à un système d'entraînement d'un véhicule hybride,
- les figures 2 à 4 qui illustrent les différents rapports de vitesse obtenus par le dispositif de transmission,
- les figures 5 à 20 qui montrent les différentes configurations permettant l'entraînement en déplacement du véhicule et/ou le fonctionnement de certaines parties de ce véhicule lorsqu'il est à l'arrêt, et
- les figures 21 à 28 qui illustrent d'autres variantes du système d'entraînement du véhicule de la figure 1.

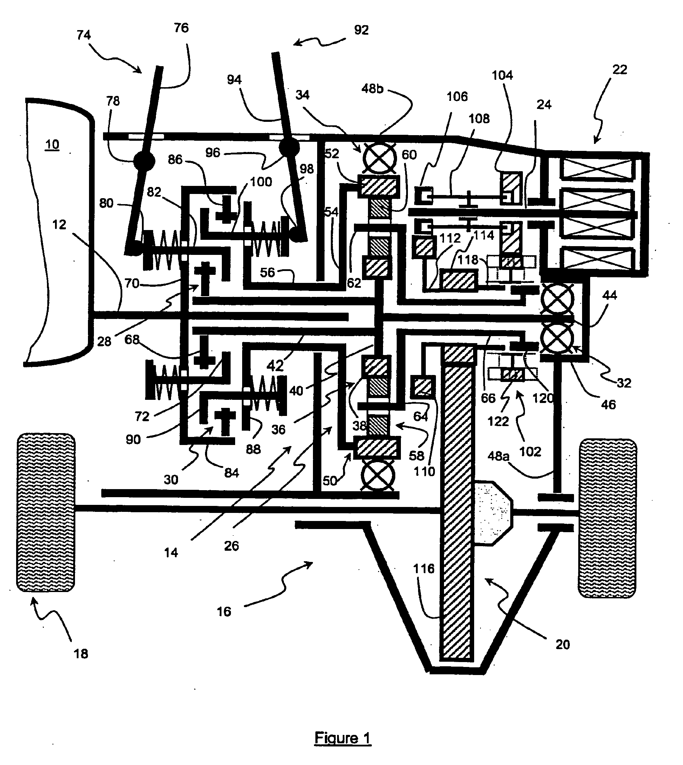

Sur la figure 1, le groupe motopropulseur comprend un moteur thermique 10, notamment un moteur à combustion interne, avec un arbre moteur 12, ici le vilebrequin de ce moteur, un dispositif de transmission à variation de vitesse 14 et un essieu moteur 16 qui permet d'entraîner les roues motrices 18 du véhicule par l'intermédiaire d'un pont différentiel 20.

Comme il sera explicité plus loin, l'arbre moteur 12 a aussi une fonction d'arbre récepteur mais pour des raisons de simplification de la description, cet arbre reste dénommé arbre moteur de manière à pouvoir le distinguer des autres arbres du dispositif de transmission.

Dans une application à un véhicule hybride, comme illustré sur cette figure, le groupe motopropulseur comprend également une machine électrique 22 avec un rotor 24, qui peut fonctionner en tant que moteur électrique d'entraînement pour le véhicule ou en tant générateur d'énergie électrique et plus particulièrement en tant qu'alternateur pour assurer la charge des batteries (non représentées).

Le dispositif de variation de vitesse 14 comprend un train épicycloïdal 26 avec deux accouplements 28, 30 à commande contrôlée et deux accouplements unidirectionnels automatiques (ou roues libres) 32, 34.

Plus précisément, le train épicycloïdal 26 comprend un planétaire 36 avec un bandeau 38 denté extérieurement et porté par un flasque 40. Ce flasque est monté fixement sur un arbre 42, dit arbre de planétaire formant un arbre d'entrée, ici un arbre creux venant coiffer l'arbre 12 du moteur en étant libre en rotation mais fixe en translation par rapport à celui-ci. Ce flasque se poursuit du coté opposé au moteur par un tourillon 44, coaxial à l'arbre creux 42, dont l'extrémité libre prend appui dans un palier 46 porté par une partie fixe 48a du groupe motopropulseur du véhicule au travers de l'accouplement unidirectionnel 32, baptisé roue libre planétaire.

Ce train comprend également une couronne 50 avec un anneau 52 denté intérieurement, placé concentriquement au planétaire, et un voile 54 relié à un arbre creux 56, dit arbre de couronne, formant un autre arbre d'entrée en venant entourer l'arbre creux 42 du planétaire tout en étant libre en rotation mais fixe en translation par rapport à celui-ci. Cette couronne est reliée extérieurement à une partie fixe 48b du groupe motopropulseur du véhicule par l'accouplement unidirectionnel 34, baptisé roue libre couronne.

Bien entendu, les deux roues libres 32 et 34 sont placées de manière telle que la couronne 50 et le planétaire 36 ne puissent tourner que dans le même sens et préférentiellement dans le même sens que l'arbre 12 du moteur.

Enfin, ce train épicycloïdal comprend un porte-satellites 58 avec au moins un mais avantageusement trois satellites 60, en forme de roue à denture extérieure, placés dans un même intervalle angulaire l'un par rapport à l'autre (ici à 120°) et engrenant avec la couronne et le planétaire.

Pour cela, l'anneau 52 de la couronne, le bandeau 38 du planétaire et les satellites 60 sont situés dans un même plan, ici dans un plan vertical en considérant la figure 1.

Ces satellites sont portés chacun par un axe horizontal 62 en étant libre en rotation mais fixe en translation sur celui-ci. Ces axes de satellites sont reliés à une paroi verticale 64 reliée à un arbre tubulaire 66, dit arbre de porte-satellites, qui forme un arbre de sortie en venant entourer le tourillon 44 du planétaire.

Les extrémités libres des arbres du planétaire et de la couronne portent chacune un accouplement à commande contrôlée 28 et 30, de préférence un embrayage à friction.

Ainsi l'embrayage 28, dit embrayage de planétaire, comprend un disque de friction 68, porté de manière fixe en rotation mais libre en translation axiale sur l'arbre de planétaire 42. Ce disque de fiction est prévu pour être serré entre un plateau de réaction 70, monté fixement en translation et en rotation sur l'arbre 12 du moteur, et un plateau de pression 72, mobile en translation par rapport à ce plateau de pression tout en étant fixe rotation avec celui-ci. Ce plateau de pression est commandé en déplacement axial par un actionneur de débrayage 74. Cet actionneur est ici sous la forme d'un levier 76 basculant sur un point fixe 78 du groupe motopropulseur du véhicule. L'une de ses extrémités 80 contrôle ce déplacement en s'appuyant sur des tirants 82 traversant le plateau de réaction et reliés au plateau de pression.

Le plateau de pression 70 se poursuit, au delà des tirants, par une paroi horizontale 84 qui porte, de manière fixe en rotation et libre en translation axiale, un autre disque de friction 86, coaxiale au disque de friction 68 et qui fait partie de l'autre embrayage 30, dénommé embrayage de couronne.

Les deux embrayages sont ainsi imbriqués l'un dans l'autre de manière à obtenir un ensemble compact.

Ce disque est à même d'être serré entre un plateau de réaction 88, monté fixement en translation et en rotation sur l'extrémité libre de l'arbre de couronne 56, et un plateau de pression 90 mobile en translation axial sous l'action d'un autre actionneur de débrayage 92. Comme précédemment, cet actionneur est sous la forme d'un levier 94 basculant sur un autre point fixe 96 du véhicule avec l'une de ses extrémités 98 qui contrôle ce déplacement en s'appuyant sur des tirants 100 qui traversent le plateau de réaction et qui sont reliés au plateau de pression.

Ainsi, lorsque l'embrayage de planétaire 28 est effectif, l'arbre moteur 12 est relié à l'arbre de planétaire 42 et le planétaire 36 tourne à la même vitesse que cet arbre moteur 12. De même, quand l'embrayage de couronne 30 est actif, l'arbre moteur 12 est relié cinématiquement à l'arbre de couronne 56 et cette couronne est entraînée en rotation à une même vitesse que l'arbre de moteur.

Comme illustré sur la figure 1, l'arbre de porte-satellites 66 est relié à l'essieu moteur 16 par une voie de transmission de mouvement 102 qui sera décrite plus en détail dans la suite de la description.

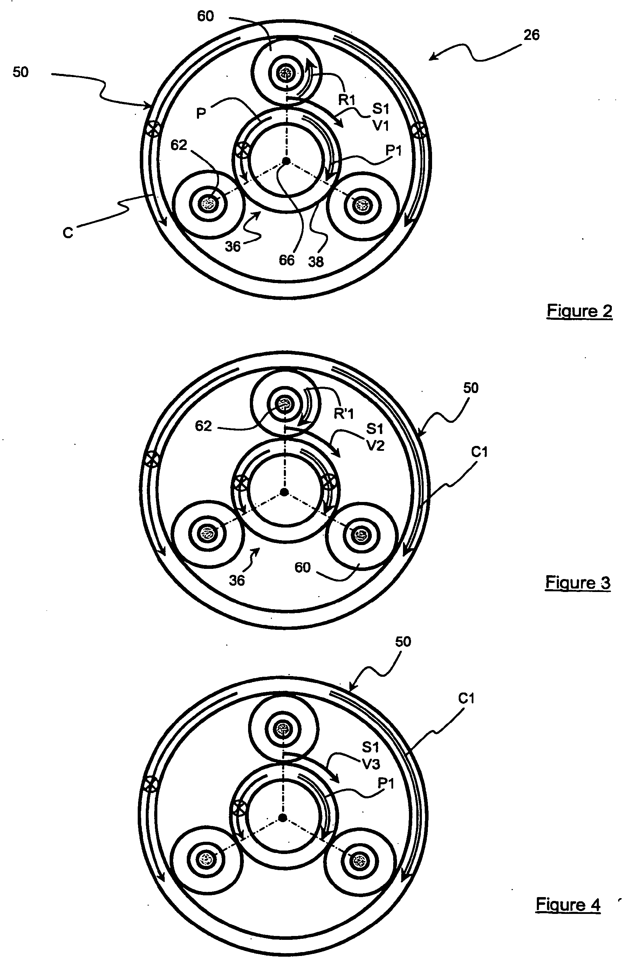

On se rapporte maintenant aux figures 2 à 4 qui, en association avec la figure 1, illustrent les différentes configurations du train épicycloïdal 26 permettant d'obtenir trois rapports de vitesse différents à partir de l'arbre 12 du moteur vers l'arbre de porte-satellites 66 et par conséquent de l'essieu moteur au travers de la voie de transmission 102.

Comme déjà mentionné, le planétaire 36 et la couronne 50 sont continuellement empêchés de tourner, par les roues libres, selon le sens de rotation indiqué sur les figures par les flèches C et P. De ce fait, ce planétaire et cette couronne ne peuvent tourner que dans le même sens de rotation que l'arbre de sortie du moteur, ici dans le sens horaire.

Pour obtenir un premier rapport de vitesse, les actionneurs de débrayage 74, 92 sont utilisés de manière à ce que l'embrayage de couronne 30 soit inactif en étant en position débrayée et en libérant le disque 86 et à ce que l'embrayage de planétaire 28 soit opérationnel en reliant l'arbre 12. du moteur avec l'arbre de planétaire 42 par le serrage du disque 68. Ce planétaire est donc entraîné en rotation selon le sens P1, indiqué sur la figure 2. De par l'engrènement du bandeau denté 38 avec les satellites 60 du porte-satellites, ceux-ci sont entraînés en rotation autour de leurs axes 62 selon le sens R1. Cette rotation fait rouler ces satellites sur la couronne, qui est immobile en rotation par la roue libre 34, par coopération des dents de ces satellites avec les dents de la couronne. Ceci permet de faire tourner l'ensemble du porte-satellites selon le sens S1, comme indiqué sur la figure 2, et avec un rapport de vitesse V1.

La rotation du porte-satellites est ensuite transmise à l'essieu moteur 16 par l'arbre de porte-satellites 66 (illustré ici par un point) et par la voie de transmission de mouvement 102 de façon à entraîner les roues motrices 18 du véhicule par l'intermédiaire du pont différentiel 20.

Pour un second rapport de vitesse (figure 3), les actionneurs de débrayage 74 et 92 sont commandés pour que l'embrayage de planétaire 28 soit inactif en rendant immobile le planétaire 36 et pour que l'embrayage de couronne 30 soit opérationnel en reliant cinématiquement l'arbre moteur 12 avec la couronne 50. La couronne est entraînée en rotation par l'arbre moteur 12 selon le sens C1 et met en rotation les satellites 60 autour de leurs axes 62 selon le sens R1. De par cette rotation et l'immobilisation du planétaire 36 par la roue libre 32, les satellites roulent sur le bandeau denté en entraînant en rotation l'ensemble du porte-satellites et selon le même sens S1 que la figure 2 mais avec un rapport de vitesse V2 différent de V1.

Comme précédemment mentionné, la rotation du porte-satellites est ensuite retransmise à l'essieu moteur 16.

Le troisième rapport (figure 4) est réalisé en rendant opérationnel les deux embrayages 28 et 30 par action des deux actionneurs de débrayage 74, 92. Par cela, l'arbre 12 du moteur est rendu solidaire à la fois avec l'arbre de planétaire et avec l'arbre de couronne en les entraînant tous deux en rotation.

Ceci a pour effet de générer la rotation du planétaire selon le sens P1 et de la couronne selon le même sens C1 et à la même vitesse que l'arbre moteur 12.

Il résulte de ces différents mouvements que le porte-satellites est mis en rotation selon le sens S1 et avec un rapport de vitesse V3 différent des deux autres V1 et V2.

Grâce à ce dispositif de variation de vitesse comportant un train planétaire avec deux embrayages et deux roues libres, il est facile d'obtenir d'une manière fiable une variation de vitesse selon trois rapports différents entre l'arbre moteur et l'essieu moteur.

Bien entendu, l'homme du métier est en mesure de calculer toutes les dimensions ainsi que toutes les valeurs et formes des dentures pour obtenir les rapports de vitesses souhaités.

En se rapportant à nouveau à la figure 1, dans une application à un véhicule hybride, il est prévu d'utiliser en plus une machine électrique 22 avec un rotor 24 sensiblement parallèle à l'arbre de porte-satellites 66.

Ce rotor porte une roue dentée extérieurement 104, fixe en translation sur ce rotor mais libre en rotation, ainsi qu'une poulie 106 avec une denture extérieure qui est également fixe en translation sur ce rotor mais libre en rotation tout en étant à distance de la roue 104.

Sur le rotor 24 et entre la roue et la poulie, est placé un actionneur à griffe 108 qui peut réaliser trois actions. Cet actionneur est placé de manière fixe en rotation mais libre en translation. Par la prise de cet actionneur à la fois dans la roue 104 et dans la poulie 106, comme illustré sur la figure 1, la liaison à rotation est réalisée entre le rotor 24 et avec à la fois la roue 104 et la poulie 106. Dans la situation où cet actionneur est en prise avec la roue 104 (position à droite de la figure 1), il établit une liaison à rotation entre le rotor 24 et cette roue. A l'opposé, lorsque cet actionneur 108 est en prise avec la poulie 106 (position à gauche de la figure 1), il établit la liaison à rotation de cette poulie avec le rotor 24.

Cette poulie coopère avec un pignon denté 110 porté par un fourreau 112 entourant l'arbre de porte-satellites 66 en étant coaxial à celui-ci. Ce fourreau porte également une roue dentée de transmission 114 qui engrène avec une roue dentée 116 reliée à l'essieu moteur. Enfin, sur l'extrémité libre de ce fourreau est placée une portée périphérique dentée 118 en regard de la roue dentée 104 de rotor.

L'extrémité libre de l'arbre porte-satellites 66 porte aussi, en regard de la roue dentée 104, une zone périphérique dentée 120.

Un pignon baladeur 122 à double denture (extérieure et intérieure) coopère, par sa périphérie dentée extérieure, constamment avec la roue 104 de rotor et par sa périphérie dentée intérieure, soit avec la zone dentée 120, soit avec la portée dentée 118, soit avec les deux à la fois.

Bien entendu, ce pignon baladeur ainsi que l'actionneur à griffe 108 et les actionneurs de débrayage 74, 92 sont contrôlés par tous moyens de commande connus, comme des vérins de tous types (hydrauliques, pneumatiques, électriques...) permettant, soit le déplacement en translation axiale du pignon baladeur et de l'actionneur à griffe, soit le débrayage des embrayages 28 et 30 par action sur les extrémités libres des leviers 76 et 94. Toutes ces actions sont bien évidemment réalisées sous la supervision d'une unité de commande, telle que le calculateur (non représenté) du groupe motopropulseur que comporte tout véhicule.

Les différentes configurations de l'ensemble du groupe motopropulseur vont être maintenant décrites en fonction du mode de traction/propulsion utilisé et/ou du fonctionnement du moteur thermique ainsi que de la machine électrique.

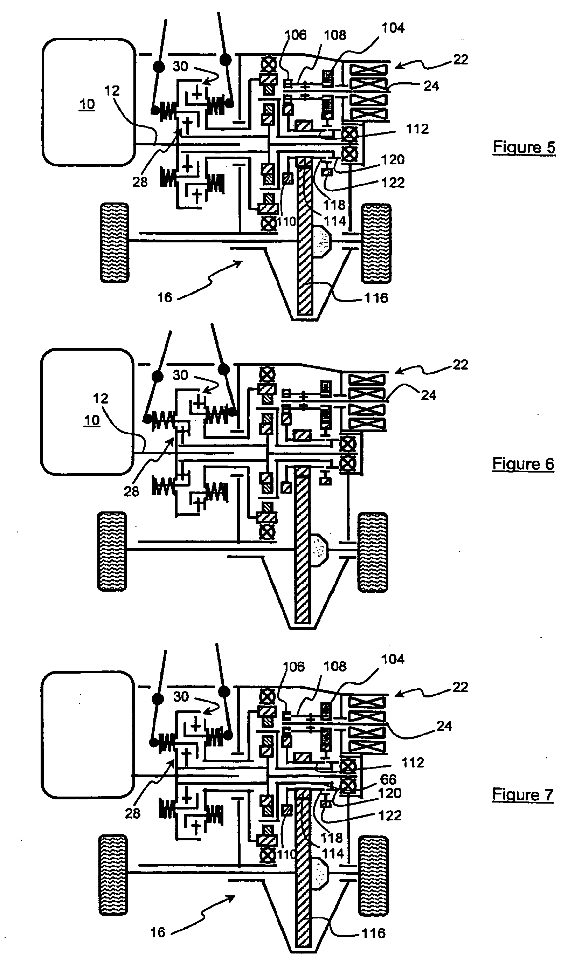

La configuration de la figure 5 illustre le mode électrique où seule la machine électrique 22 est utilisée, notamment en tant que machine motrice du véhicule.

Pour cela, les deux embrayages 28 et 30 sont inactifs, l'actionneur 108 est en prise uniquement avec la poulie 106 et le pignon baladeur 122 engrène à la fois avec la portée dentée 118, la zone dentée 120 et la roue 104.

Dés que la machine électrique 22 est alimentée électriquement son rotor 24 est entraîné en rotation et cette machine fonctionne en tant que moteur électrique. Ce mouvement de rotation est transmis à la poulie 106 par l'actionneur à griffe 108.

La rotation de la poulie 106 est ensuite transmise au pignon 110 puis à la roue dentée de transmission 114 portée par le fourreau 112..Cette roue 114, qui coopère avec la roue dentée 116 de l'essieu, permet ainsi de transmettre cette rotation à l'essieu moteur 16 avec un rapport de vitesses court.

L'engrènement du pignon baladeur 122 avec la portée dentée 118, la zone dentée 120 et la roue 104 n'a aucune influence sur le fonctionnement, car aucun de ces éléments n'est relié cinématiquement, soit à l'arbre moteur 12, soit au rotor 24. Cette configuration permet cependant de redémarrer le moteur 10 pendant l'entrainement du véhicule selon le mode électrique

Cette configuration permet de faire fonctionner le véhicule en marche avant tout en laissant la possibilité au moteur 10 de rester en fonctionnement, notamment pour l'entraînement des auxiliaires du véhicule (pompe de direction assistée, compresseur de climatisation,...).

Dans la configuration de la figure 6, il est prévu de faire fonctionner le véhicule en mode électrique et d'assurer le démarrage du moteur thermique.

Pour cela, les deux embrayages 28 et 30 sont opérationnels et l'actionneur 108 ainsi que le pignon baladeur 122 sont placés dans la position de la figure 5, comme décrit ci-dessus.

Dés que le rotor 24 est mis en rotation ou bien après sa mise en rotation, celui-ci est relié à l'arbre 12 du moteur par la poulie 106, le pignon 110, le pignon baladeur 122 qui coopère à la fois avec la portée dentée 118 du fourreau 112 et la zone dentée 120 de l'arbre de porte-satellites 66, les satellites 60 du porte-satellites 58, le planétaire 36 dont l'arbre 42 est relie à rotation à l'arbre moteur 12 par l'embrayage de planétaire 28 et la couronne 50 dont l'arbre 56 est relié à rotation à ce même arbre moteur par l'embrayage de couronne 30.

Il est donc possible de réaliser le démarrage du moteur thermique par la mise en rotation de son arbre moteur 12 sous l'impulsion du rotor 24 de la machine électrique 22 et sous le contrôle du calculateur.

Bien entendu, dès que le démarrage du moteur thermique est obtenu, l'un ou l'autre des actionneurs de débrayages 74 ou 92 (ou les deux) peut être commandé de façon à désaccoupler l'arbre 12 de moteur du rotor 24 en rendant inactif l'embrayage 28 ou 30 (ou les deux embrayages) qu'il contrôle.

Dans cette configuration, la machine électrique 22 a un double rôle, d'une part, la traction/propulsion du véhicule et, d'autre part, le démarrage du moteur thermique alors que le véhicule est en circulation.

Bien entendu, le moteur thermique peut rester en fonctionnement, notamment pour assurer l'entraînement de ses auxiliaires.

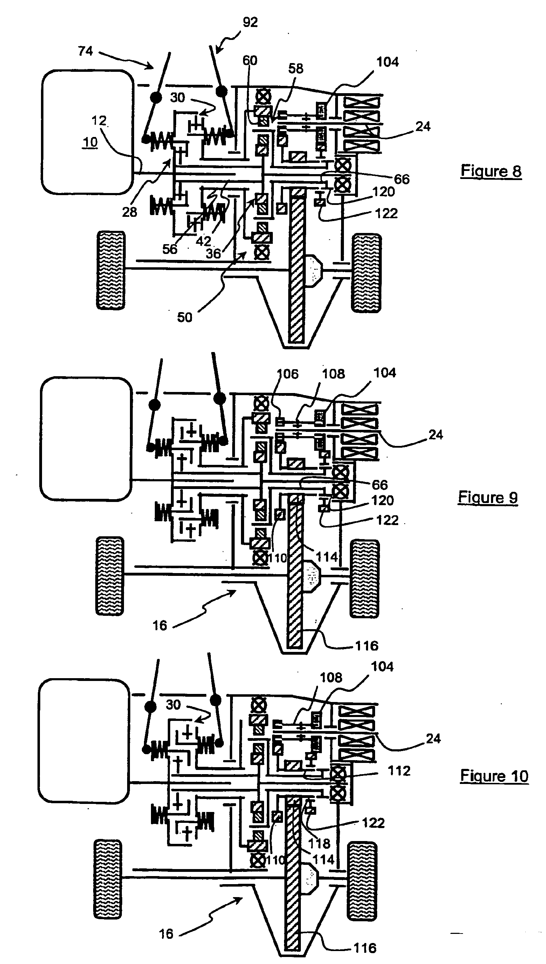

Dans les configurations illustrées aux figures 7 et 8, les fonctions obtenues sont semblables à celles des figures 5 et 6 mais avec un entraînement du véhicule avec un rapport long.

Ainsi, sur la figure 7, qui est le pendant de la figure 5, l'actionneur à griffe 108 coopère avec la roue 104, et le pignon baladeur 122 engrène à la fois avec la portée dentée 118 et la zone dentée 120, et les deux embrayages 28 et 30 sont inactifs.

Lors de l'alimentation électrique de la machine électrique 22, le rotor 24 est mis en rotation et ce mouvement de rotation est transmis au pignon baladeur 122 par la roue 104.

Par sa liaison avec la portée dentée 118 et la zone dentée 120, cette rotation du pignon baladeur est transmise au fourreau 112 et à l'arbre de porte-satellites 66.

La rotation du fourreau est ensuite transmise par la roue dentée de transmission 114 à la roue dentée 116 de l'essieu.

Ceci permet ainsi de transmettre la rotation du rotor 24 à l'essieu moteur 16 avec un rapport de vitesse long.

L'engrènement du pignon 110 avec la poulie 106 n'a aucune influence sur le fonctionnement, car cette poulie est libre en rotation sur le rotor. De même, la mise en rotation de l'arbre porte-satellites par le pignon baladeur 122 n'influe pas sur le fonctionnement car les deux embrayages sont inactifs.

Sur l'exemple illustré de la figure 8, il est prévu de faire fonctionner le véhicule en mode électrique et d'assurer le démarrage du moteur thermique, comme pour l'exemple de la figure 6 mais avec un rapport long.

Similairement à la figure 6, la configuration de la figure 7, qui permet l'entraiment du véhicule, est reprise et les deux embrayages 28 et 30 sont opérationnels.

L'arbre 12 du moteur est donc entraîné en rotation par le rotor 24 au travers de la roue 104, du pignon baladeur 122 qui coopère avec la zone dentée 120 de l'arbre de porte-satellites 66, des satellites 60 du porte-satellites 58, du planétaire 36 dont l'arbre 42 est relié à rotation à l'arbre 12 de moteur par l'embrayage de planétaire 28 et de la couronne 50 dont l'arbre 56 est relié à ce même arbre de moteur par l'embrayage de couronne 30.

Comme déjà mentionné, après que le démarrage du moteur thermique soit obtenu, les actionneurs de débrayage 74 et 92 peuvent être commandés de façon à désaccoupler l'arbre 12 de moteur du rotor 24.

Les configurations des figures 9 et 10 sont semblables à celles des figures 5 et 7 mais avec une position du pignon baladeur 122 qui permet de ne pas entraîner la rotation du porte-satellites tout en assurant la traction/propulsion du véhicule en mode électrique.

Dans le cas de la figure 9, l'actionneur 108 est en prise avec la poulie 106 et le pignon baladeur 122 engrène avec la roue 104 et la zone dentée 120 de l'arbre de porte-satellites 66.

La rotation du rotor 24 est donc transmise à l'essieu 16 selon un rapport court par la poulie 106, le pignon 110, la roue de transmission 114 et la roue dentée 116 d'essieu.

Similairement, dans le cas de la figure 10, l'actionneur 108 est en prise avec la roue dentée 104 et le pignon baladeur 122 engrène avec la roue dentée 104 et la portée dentée 118 portée par le fourreau 112.

Ainsi, la rotation du rotor 24 est transmise à l'essieu 16 avec un rapport long par l'intermédiaire de la roue 104, le pignon baladeur 122, la roue de transmission 114 et la roue dentée 116 d'essieu.

Aussi bien dans le cas de la figure 9 que celui de la figure 10, aucun mouvement de rotation n'est transmis à un élément du train planétaire ce qui ne peut qu'améliorer le fonctionnement du dispositif, notamment par la possibilité de marche arrière et la diminution des pertes.

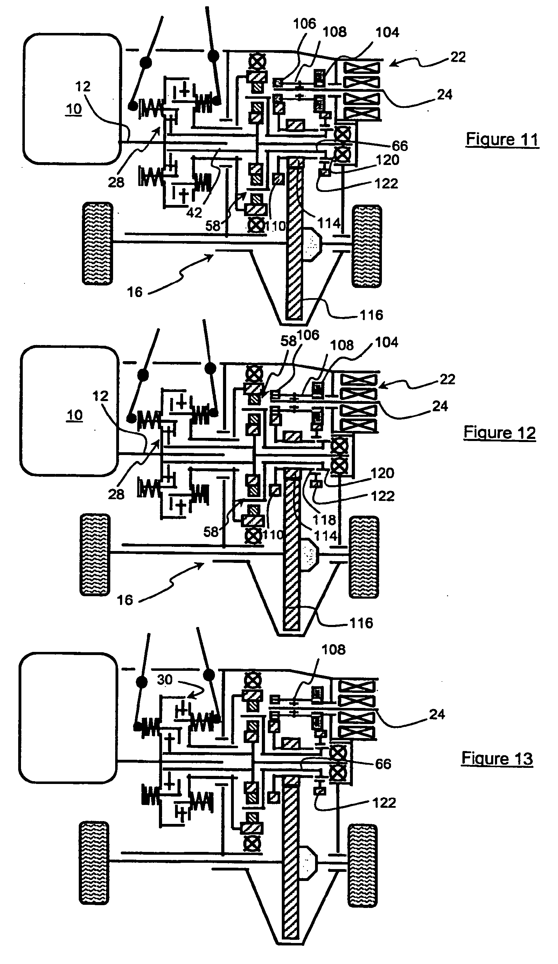

Les configurations des figures 11 à 14 illustrent la traction/propulsion du véhicule par le moteur thermique 10 selon les rapports de vitesse V1 à V3, montrés aux figures 2 à 4, ainsi que les différentes possibilités d'utiliser la machine électrique 22 en tant que génératrice électrique.

Ainsi, pour les figures 11 et 12, le rapport utilisé V1 correspond à celui de la figure 2.

Pour la configuration de la figure 11, l'embrayage de planétaire 28 est actif en rendant solidaire l'arbre 12 du moteur 10 avec l'arbre de planétaire 42, l'actionneur 108 est en prise avec la roue 104 ainsi qu'avec la poulie 106 et le pignon baladeur 122 engrène avec la roue 104 et la zone dentée 120 portée par l'arbre de porte-satellites 66.

La rotation de l'arbre moteur 12 permet, comme déjà décrit en relation avec la figure 2, d'entraîner la rotation du porte-satellites 58 selon le rapport de vitesse V1. Cette rotation est transmise au pignon baladeur 122 qui la retransmet à la roue 104. Compte tenu de la prise de l'actionneur 108 avec cette roue, cette rotation est transmise au rotor 24 de la machine électrique 22 et à la poulie 106. Cette poulie communique cette rotation au pignon 110 qui, lui même, la transfère à la roue dentée de transmission 114 par le fourreau 112. Cette roue dentée 114 engrène ensuite avec la roue dentée 116 d'essieu pour entraîner en rotation l'essieu moteur 16.

En ce qui concerne la configuration de la figure 12, l'embrayage de planétaire 28 est actif en rendant solidaire l'arbre 12 du moteur 10 avec l'arbre de planétaire 42, l'actionneur 108 est en prise avec la poulie 106 et le pignon baladeur 122 engrène avec la roue 104 et la zone dentée 120 portée par l'arbre de porte-satellites 66 ainsi que la portée dentée 118.

La rotation de l'arbre moteur 12 permet donc d'entraîner la rotation du porte-satellites 58 selon le rapport de vitesse V1. Cette rotation est transmise au pignon baladeur 122 qui la retransmet à la roue 104 et à la portée périphérique dentée 118 du fourreau 112.

Par cette liaison à rotation avec le fourreau, le mouvement de rotation du pignon baladeur 122 est transmis au pignon 110 et à la roue 114 qui le retransmet à la roue 116 puis à l'essieu moteur 16.

Pour ce qui concerne le mouvement de rotation du pignon 110, celui-ci est ensuite transmis au rotor 24, de par sa prise avec l'actionneur 108.

Ainsi, aussi bien pour l'exemple de la figure 11 que celui de la figure 12, le véhicule est entraîné en déplacement par le moteur thermique 10 avec deux rapports finaux de vitesse différents, la rapport de vitesse illustré selon la figure 11 étant plus court que celui illustré par la figure 12.

Par contre, le rotor 24 de la machine 22 est entraîné selon deux vitesses différentes liées également au même rapport V1 du train.

Ce rotor tourne donc à une vitesse lorsque le pignon baladeur 122 engrène avec la zone dentée 120 et avec la roue 104 (figure 11) et à une autre vitesse lorsque ce pignon baladeur le met en relation avec l'arbre de porte-satellites au travers du pignon 110 porté par le fourreau 112 (figure 12).

La machine électrique 22 qui est utilisée, dans ces deux cas, en tant que génératrice électrique, notamment pour assurer la recharge des batteries, peut donc avoir deux régimes de charge pour ces batteries.

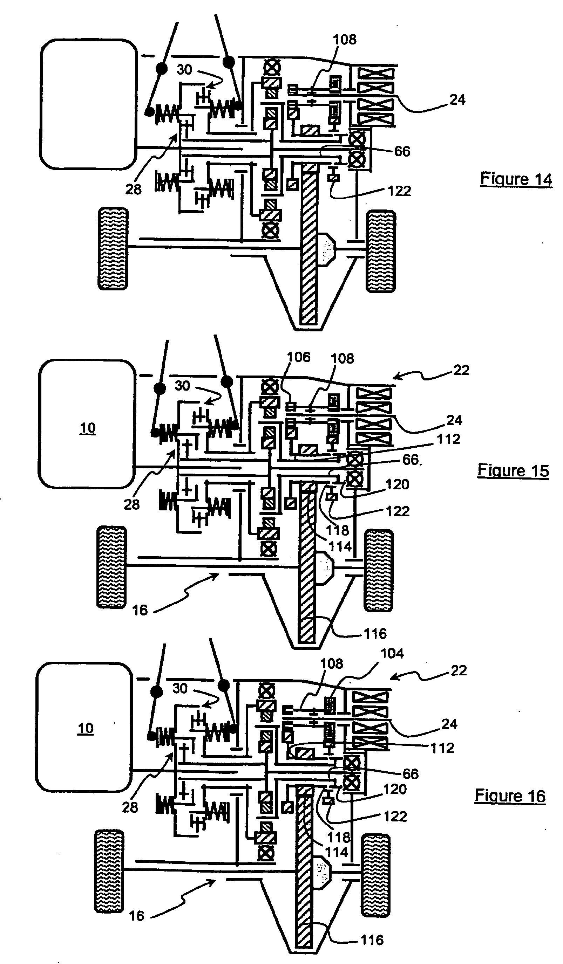

Les exemples des figures 13 et 14 illustrent les configurations selon lesquelles l'embrayage de couronne 30 est actif (figure 13) avec l'effet d'obtenir le rapport V2 à l'arbre de porte-satellites 66, comme décrit avec la figure 3, ou l'embrayage de planétaire 28 ainsi que l'embrayage de couronne 30 sont actifs (figure 14) en ayant pour résultat le rapport V3 à l'arbre de porte-satellites 66, tel que décrit avec la figure 4.

Bien entendu, les différentes positions du pignon baladeur 122 et de l'actionneur 108 des figures 11 et 12 peuvent être également utilisées dans le cadre des figures 13 et 14 pour obtenir les différentes vitesses de rotation du rotor 24.

Dans la configuration des figures 15 et 16, la traction/propulsion du véhicule est assurée par la machine électrique 22 associée au moteur thermique 10.

Comme précédemment mentionné, les embrayages 28 et 30 sont commandés de façon à obtenir l'un des trois rapports V1 à V3 à l'arbre de porte-satellites 66. La rotation de cet arbre est ensuite transmise par la roue 114 à la roue 116 puis à l'essieu 16 pour entraîner en déplacement le véhicule.

Conjointement, l'actionneur 108 est en prise, soit avec la poulie dentée 106 (figure 15), soit avec la roue 104 (figure 16) et le pignon baladeur engrène avec la roue 104 et la portée dentée 118 ainsi que la zone dentée 110 (figures 15 et 16).

La machine 22 est alimentée en énergie électrique par les batteries de façon à fonctionner comme moteur électrique avec la rotation du rotor 24. Cette rotation est transmise au fourreau 112 par la poulie 106 (figure 15) ou par la roue 104 et le pignon baladeur 122 (figure 16).

De ce fait, la puissance générée par ce moteur électrique est transmise par la roue dentée de transmission 114 à la roue dentée 116 en venant se cumuler à celle fournie par le moteur thermique.

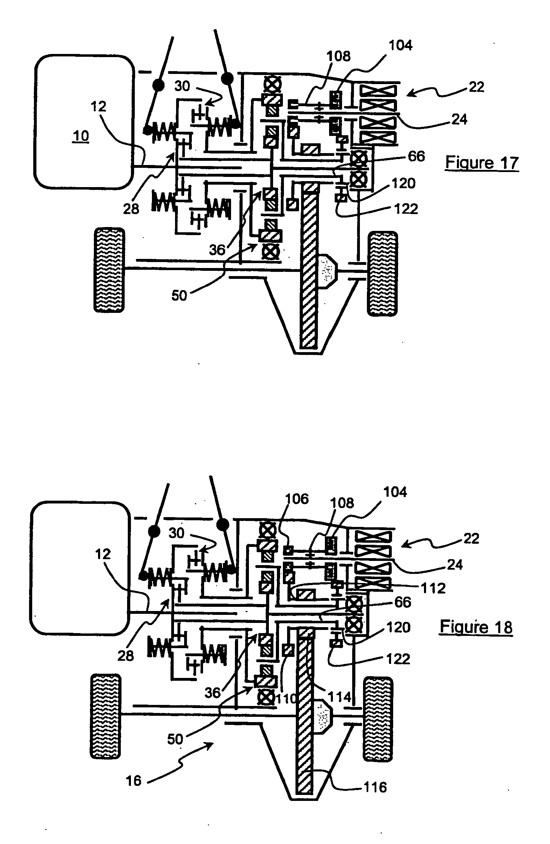

Pour le démarrage du moteur thermique 10 alors que le véhicule est à l'arrêt, il est prévu d'utiliser la configuration de la figure 17 avec la machine 22 fonctionnant comme un démarreur électrique.

Pour cela les deux embrayages 28 et 30 sont actifs, l'actionneur 108 est en prise avec la roue 104 et le pignon baladeur 122 engrène avec cette roue 104 et la zone dentée 120 de l'arbre de porte-satellites 66.

Dès que la machine 22 est alimentée électriquement par les batteries, son rotor 24 est entraîné en rotation. Compte tenu de la liaison à rotation entre le rotor et la roue 104, cette dernière est entraînée en rotation. Cette rotation est ensuite transmise au pignon baladeur 122 puis à l'arbre de porte-satellites 66. La rotation de cet arbre génère la rotation de la couronne 50 et du planétaire 36 qui, à leur tour, entraîne la rotation de l'arbre 12 du moteur.

Le démarrage de ce moteur thermique est donc réalisé et cela sous le contrôle du calculateur.

Bien évidement, dès que le démarrage du moteur est obtenu, les embrayages peuvent être rendus inactifs de façon à désolidariser le moteur 10 de la machine 22.

Pour ce qui concerne la recharge seule des batteries alors que le véhicule est à l'arrêt, la configuration est celle déjà décrite en relation avec la figure 17 mis avec la différence que l'arbre 12 du moteur est déjà en rotation et que la machine 22 fonctionne en tant que génératrice électrique.

La rotation de l'arbre moteur 12 est donc transmise à l'arbre de porte-satellites 66 selon l'un des trois rapports de vitesse V1 à V3, puis au pignon baladeur 122. Celui-ci transmet sa rotation à la roue 104 puis au rotor 24.

Cette rotation du rotor permet donc d'utiliser la machine électrique comme générateur pour recharger les batteries et/ou alimenter des accessoires du véhicule.

Pour ce qui concerne le frein moteur, la configuration utilisée correspond à celle de la figure 18 avec les deux embrayages 28 et 30 en position active, l'actionneur 108 en prise avec la roue 104 ainsi qu'avec la poulie 106 et le pignon baladeur 122 en engrènement avec cette roue 104 et la zone dentée 120 de l'arbre de porte-satellites 66.

L'essieu moteur 16 entraîne en rotation la roue dentée 116 d'essieu et la roue dentée 114 de transmission portée par le fourreau 112. La rotation du fourreau est transmise par le pignon 110 à la poulie 106 qui le transmet au rotor 24 et à la roue 104. Cette rotation de la roue 104 est ensuite retransmise au pignon baladeur 122 puis à l'arbre de porte-satellites 66 et enfin à l'arbre 12 de moteur via la couronne 50 et le planétaire 36.

Compte tenu de la liaison en rotation entre l'essieu 16 et l'arbre 12 du moteur, ce dernier transmet un couple négatif et ralentit la rotation de l'arbre de porte-satellites 66. Ce ralentissement est ensuite transmis à l'essieu moteur pour diminuer sa vitesse de rotation.

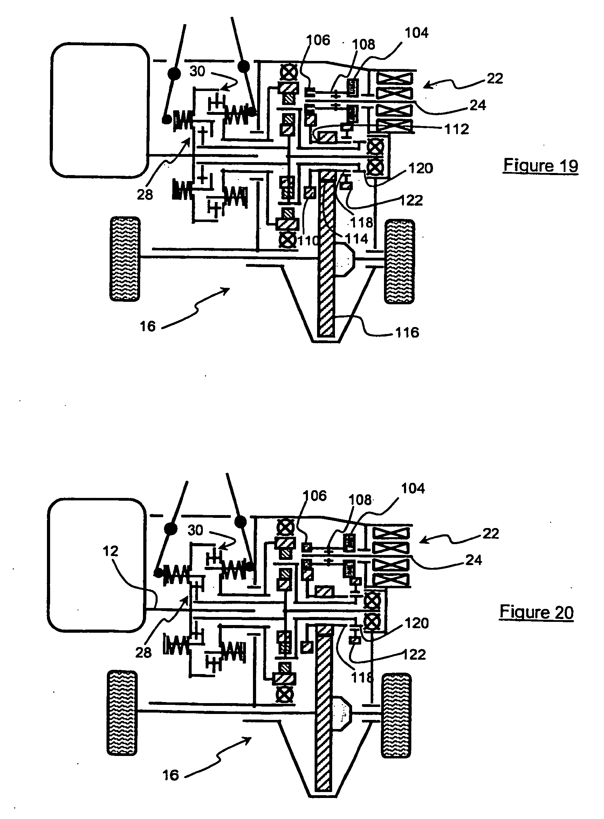

Selon la configuration illustrée à la figure 19, il est possible de récupérer de l'énergie au freinage.

L'actionneur 108 est en prise, soit avec la roue 104, soit avec la poulie dentée 106 (non illustré), et le pignon baladeur engrène avec la roue 104 et la portée dentée 118 (figure 19) ou avec la zone dentée 120 (non illustré).

La position des embrayages 28 et 30 est sans conséquence sur la récupération d'énergie.

Lors du freinage, l'énergie à récupérer transite de l'essieu 16 vers la roue 116 puis vers la roue 114. La rotation de cette roue dentée 114 entraîne la rotation du fourreau 112 et de la poulie 106 par le pignon 110 ou de la roue 104 par le pignon baladeur 122 (non illustré).

Dans les deux cas, ceci procure une mise en rotation du rotor 24. Cette rotation est ainsi utilisée pour transformer la machine 22 en générateur électrique.

Dans la situation de la figure 20, la récupération d'énergie au freinage et le frein moteur sont réalisés.

Pour une telle réalisation les deux embrayages 28 et 30 sont actifs, l'actionneur 108 est en prise à la fois avec la roue 104 et avec la poulie 106 ou soit avec la roue 104 soit avec la poulie 106 (non représenté), et le pignon baladeur 122 engrène avec cette poulie 106 et la zone dentée 120 de l'arbre de porte-satellites 66 ou avec cette poulie 106 et la zone dentée 120 de l'arbre de porte-satellites 66 ainsi que la portée dentée 118 du fourreau 112 (non représenté).

Grâce à cela, l'essieu 16 est mis en relation à la fois avec le rotor 24 pour utiliser la machine 22 en tant que génératrice et avec l'arbre 12 de moteur pour réaliser un frein moteur.

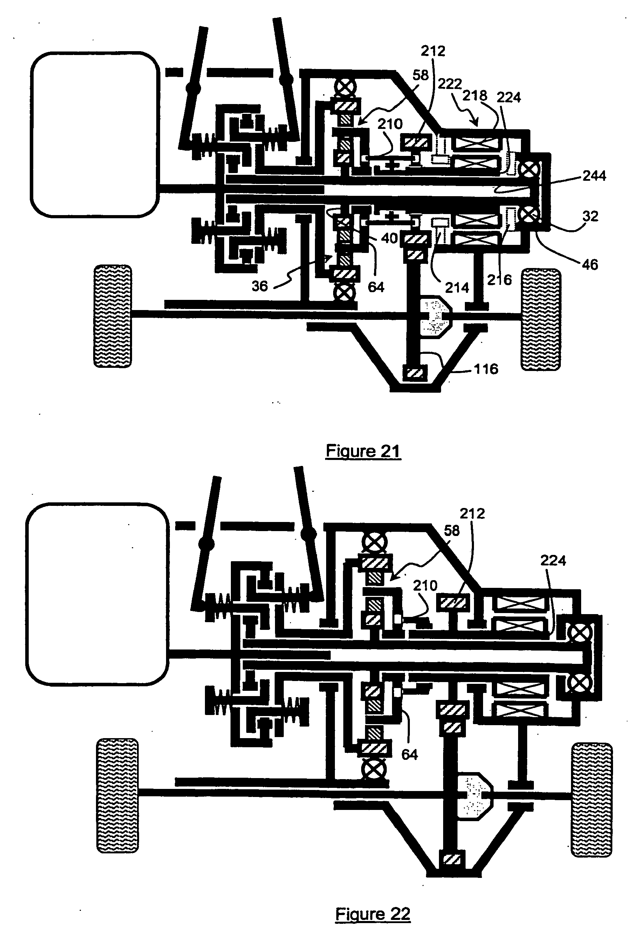

Dans la variante illustrée à la figure 21, qui comporte les mêmes références pour les éléments communs à ceux de la figure 1, le rotor 224 de la machine électrique 222, ici sous la forme tubulaire, est placée coaxialement au tourillon 244. Ce tourillon présente une conformation de tube creux relié au flasque 40 du planétaire 36 et s'appuie sur la roue libre 32 placée dans le palier 46.

Le rotor 224 de cette machine vient entourer ce tourillon et porte, au voisinage de son extrémité libre située en regard du porte-satellites 58, un actionneur à griffe 210, fixe en rotation mais libre en translation sur ce rotor.

Cet actionneur est prévu pour être en prise avec la paroi verticale 64 du porte-satellites 58 et/ou avec une poulie dentée 212 coopérant à engrènement avec la roue dentée 116 d'essieu.

Avantageusement, il peut être envisagé de placer des cloisons 214 et 216 de part et d'autre du corps 218 de la machine électrique de manière à l'isoler du dispositif de transmission en réalisant ainsi un moteur dit moteur sec.

Pour des raisons de simplification de la description qui va suivre, toutes mentions d'actionneur à griffe signifient que cet actionneur est libre en translation sur l'élément qui le porte tout en étant fixe en rotation par rapport à celui-ci.

Pour la variante de la figure 22, celle-ci se distingue de la figure 21 par le fait que la poulie dentée 212 est montée fixe en rotation et en translation sur le rotor 224. De ce fait, l'actionneur à griffe 210 peut être en prise uniquement avec la paroi 64 du porte-satellites 58.

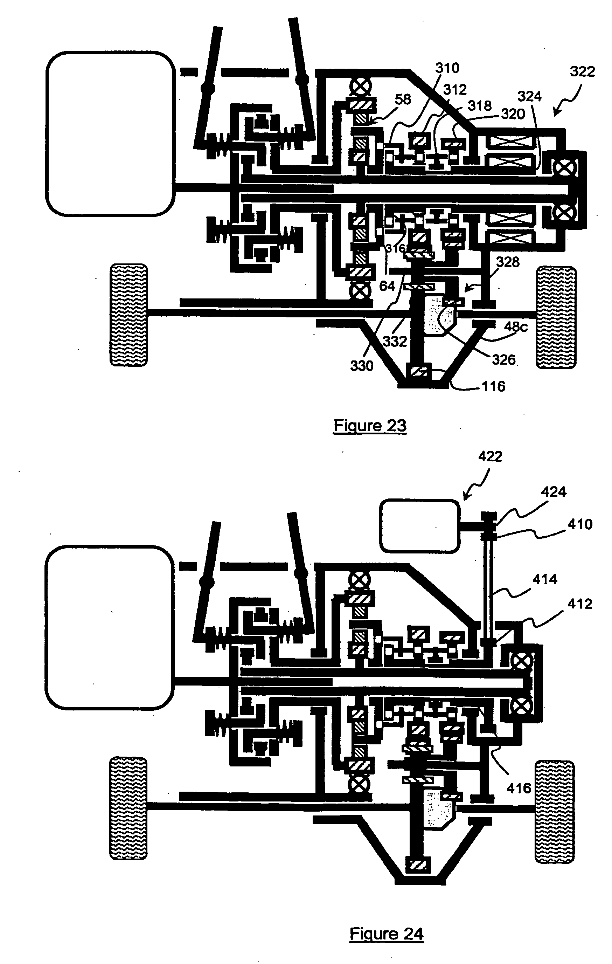

Dans la variante de la figure 23, la machine électrique 322 est dans la même disposition que celle de la figure 21.

Son rotor 324 porte un premier actionneur à griffe 310 qui peut être en prise avec la paroi 64 du porte-satellites 58 ou avec une poulie dentée 312, fixe en translation et libre en rotation sur ce rotor, qui coopère à engrènement avec la roue dentée 116 d'essieu, ou avec un flasque 316 fixe sur le rotor.

Ce rotor porte également un autre actionneur à griffe 318 qui peut être en prise, soit avec la poulie dentée 312, soit avec un pignon denté 320 porté également de manière fixe en translation et libre en rotation sur ce rotor.

Ce pignon coopère avec un étage 326 d'un pignon denté étagé 328 porté à rotation par un axe 330 issu d'une partie fixe 48c du véhicule. L'autre étage 332 de ce pignon étagé coopère avec la roue dentée 116 d'essieu.

La variante de la figure 24 montre une disposition particulière de la machine électrique 422 par rapport à celle de la figure 23.

Cette machine est située en dehors du dispositif de transmission et comprend un rotor 424 avec une poulie 410 qui est reliée à un plateau 412 par tous moyens appropriés, comme une courroie ou une chaîne 414.

Ce plateau est fixé sur un tube creux 416 qui dans le cadre de la figure 21 faisait office de rotor de cette machine électrique.

Par cela, toute rotation du rotor 424 est directement transmise au tube 416.

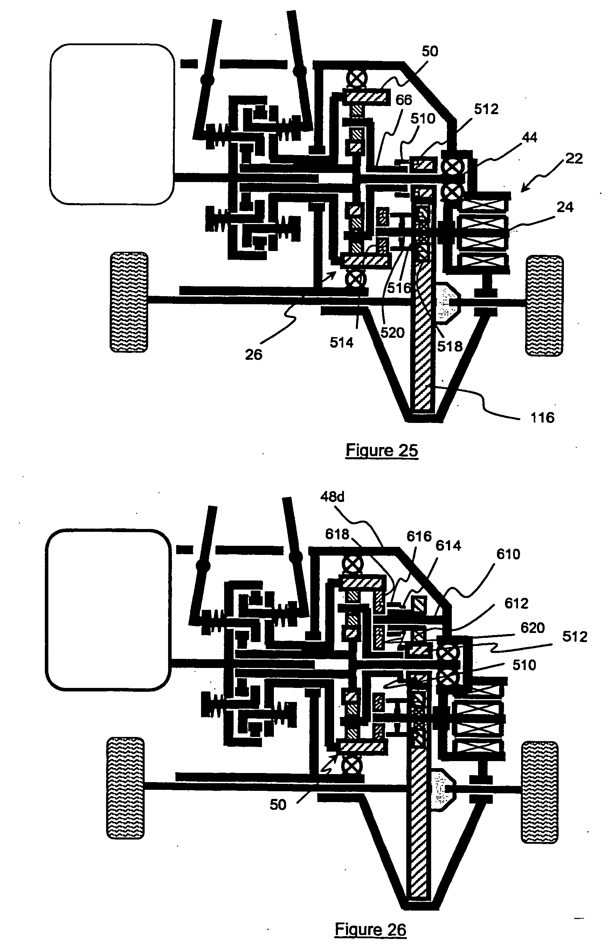

Sur la figure 25, l'arbre porte satellite 66 porte un actionneur à griffe 510 pour coopérer avec une roue dentée 512, portée par le tourillon 44 en y étant libre en rotation et fixe en translation.

Le rotor 24 de la machine électrique 22, qui est placé parallèlement au tourillon 44, porte au voisinage de son extrémité libre une roue dentée 514, libre en rotation et fixe en translation par rapport à ce rotor, qui coopère avec la denture de la couronne 50 du train épicycloïdal 26. Ce rotor porte également une roue libre 516 sur laquelle est montée une autre roue dentée 518, fixe en translation et coopérant avec la roue 116 d'essieu. Un actionneur à griffe 520 est placé entre ces deux roues de façon à être en prise alternativement avec l'une ou l'autre de ces roues dentées.

La figure 26 se distingue de la figure 25 par l'addition d'un axe 610 issu d'une partie fixe 48d du véhicule en étant parallèle à l'axe du rotor. Sur cet axe est placée une roue dentée 612, libre en rotation et fixe en translation et qui coopère avec la roue 512. Cette roue dentée 612 est munie d'un palier fixe 614 sur lequel est logé un actionneur à griffe 616 pour coopérer avec une roue dentée 618 coopérant avec la denture de la couronne 50.

L'actionneur à griffe 510 du tourillon est relié avec l'actionneur à griffe 616 de l'axe additionnel par un système de commande à basculement 620 qui interdit que les deux actionneurs soient simultanément en prise. Ainsi, comme illustré sur cette figure, quand l'actionneur 510 est en prise avec la roue 512, l'actionneur 616 ne peut pas être en prise avec la roue 618.

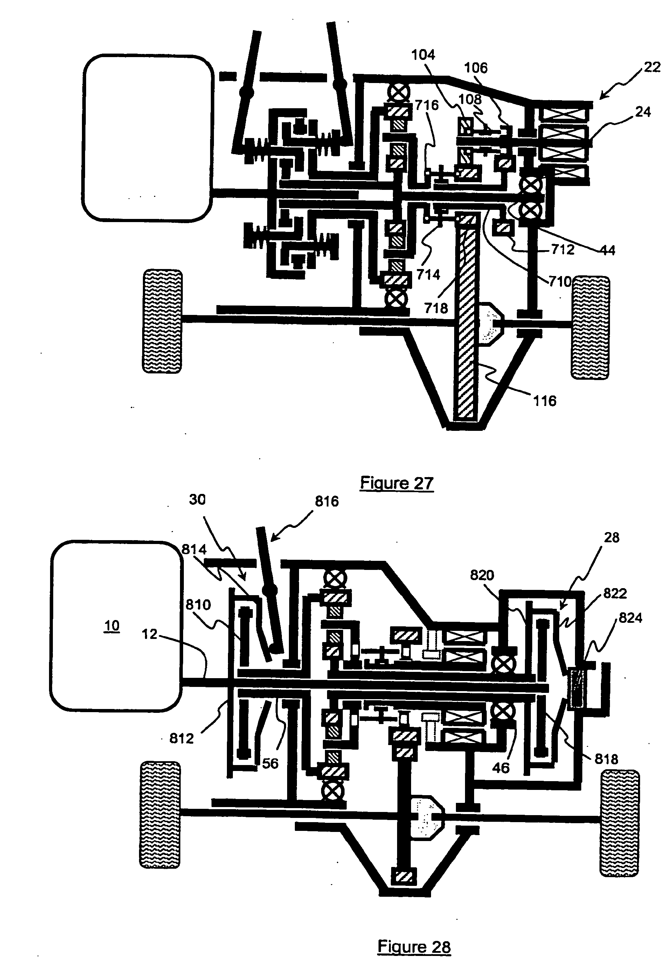

Sur la figure 27, la machine électrique 22 comprend un rotor 24 avec une poulie 104, une roue 106 et un actionneur à griffe 108 semblables à la figure 1.

Le tourillon 44 est entouré par un arbre tubulaire 710 qui porte un plateau denté 712 coopérant avec la roue 106. Au voisinage de son extrémité libre, l'arbre tubulaire porte un actionneur à griffe 714 qui peut coopérer avec une plaque 716 porté par l'arbre de porte-satellites 66 ou avec un roue dentée 718, portée par l'arbre tubulaire 710 de manière fixe en translation et libre en rotation, et qui engrène avec la roue dentée 116 d'essieu.

L'exemple de la figure 28 diffère de celui de la figure 21 en ce que les embrayages 28 et 30 ne sont plus imbriqués l'un dans l'autre.

Ainsi, pour l'embrayage de couronne 30, l'arbre de couronne 56 porte, du coté du moteur 10, un disque de friction 810. Ce disque est destiné à être serré entre un plateau de réaction 812 porté fixement par l'arbre 12 de moteur et un plateau de pression 814 soumis à un déplacement axial sous l'action d'un actionneur de débrayage 816.

En ce qui concerne l'embrayage de planétaire 28, l'arbre moteur 12 est prolongé au-delà du palier 46. L'extrémité du prolongement porte ainsi un disque de friction 818 qui est prévu pour être serré entre un plateau de réaction 820 porté par l'arbre de planétaire 42 et un plateau de pression 822 mobile en translation axial sous l'effet d'un actionneur de débrayage 824.

Bien entendu, toutes les fonctions obtenues à partir de la figure 1 et illustrées dans les configurations des figures 2 à 20 sont également réalisables à partir des figures 21 à 28 et cela en commandant de manière appropriée tout ou partie des actionneurs.

Il est à préciser que dans le cas des figures décrites ci-dessus, la voie de transmission de mouvement 102 comporte tous les éléments compris entre l'arbre porte-satellites 66 et l'essieu 16 et qui permettent d'assurer la liaison cinématique entre cet arbre et cet essieu.

Ainsi, à titre d'exemple pour la figure 1, la voie 102 comporte les éléments comprenant la portée dentée 120, le pignon baladeur 122, la roue 104, l'actionneur à griffe 108, la poulie 106, le pignon 110 et la roue dentée de transmission 114 ainsi que la portée dentée 118 portés par le fourreau 112, et la roue dentée d'essieu 116liée à l'essieu 16.

De même, tout ou partie de cette voie de transmission de mouvement est utilisé avec la machine électrique 22 pour assurer les différentes fonctions, comme l'entraînement en rotation de l'essieu (seul ou en association avec le moteur thermique), le démarrage du moteur thermique, la recharge des batteries, ...

## Revendications

1. Dispositif de transmission à variation de vitesse pour groupe motopropulseur de véhicule automobile comportant un train épicycloïdal (26) avec un planétaire (36) et une couronne (50) reliés à l'arbre (12) du moteur thermique (10) dudit véhicule ainsi qu'un porte-satellites (58) relié par une voie de transmission de mouvement (102) à l'essieu moteur (16) de ce véhicule, **caractérisé en ce que** le planétaire (36) et la couronne (50) sont reliés chacun à l'arbre (12) du moteur par un accouplement à commande contrôlée (28, 30) et à une partie fixe (48a, 48b) du véhicule par un accouplement unidirectionnel (32, 34).

2. Dispositif de transmission selon la revendication 1, **caractérisé en ce que** l'accouplement unidirectionnel comprend une roue libre (32, 34).

3. Dispositif de transmission selon l'une des revendications précédentes, **caractérisé en ce que** l'accouplement à commande contrôlée comprend un embrayage à friction (30) dont le disque de friction (86) est porté par l'arbre (12) du moteur.

4. Dispositif de transmission selon l'une des revendications précédentes, **caractérisé en ce que** l'accouplement à commande contrôlée comprend un embrayage à friction (28) dont le disque de friction (68) est porté par l'arbre (42) du planétaire (36).

5. Dispositif de transmission selon l'une des revendications précédentes, **caractérisé en ce que** l'accouplement à commande contrôlée comprend un embrayage à friction (30) dont le disque de friction (86) est porté par l'arbre (56) de la couronne (50).

6. Dispositif de transmission selon l'une des revendications précédentes, **caractérisé en ce que** le planétaire (36) est relié à la partie fixe (48a) du véhicule par un accouplement unidirectionnel (32) porté par un tourillon (44, 244) issu dudit planétaire (36).

7. Dispositif de transmission selon l'une des revendications précédentes, **caractérisé en ce que** le planétaire (36) est relié à la partie fixe (48a) du véhicule par un accouplement unidirectionnel (32) porté par l'arbre (42) de planétaire.

8. Dispositif de transmission selon l'une des revendications précédentes, **caractérisé en ce que** la couronne (50) est reliée à la partie fixe (48b) du véhicule par un accouplement unidirectionnel (34) porté par ladite couronne.

9. Procédé d'obtention de rapports de vitesse utilisant le dispositif de transmission selon l'une des revendication précédentes, **caractérisé en ce qu'**il consiste à ne pas autoriser la rotation de la couronne (50) dans aucun de ses deux sens de rotation et à commander le planétaire (36) en un sens de rotation (P1) par l'accouplement (28) entre l'arbre (12) de moteur et ledit planétaire pour obtenir un rapport de vitesse (V1) entre ledit arbre de moteur et le porte-satellites (58).

10. Procédé selon la revendication 9, **caractérisé en ce qu'**il consiste à ne pas autoriser la rotation du planétaire (36) dans aucun de ses deux sens de rotation et à commander la couronne (50) en un sens de rotation (C1) par l'accouplement (30) entre l'arbre (12) de moteur et ladite couronne pour obtenir un rapport de vitesse (V2) entre ledit arbre de moteur et le porte-satellites (58).

11. Procédé selon la revendication 9, **caractérisé en ce qu'**il consiste à commander le planétaire (36) en un sens de rotation (P1) par l'accouplement (28) entre l'arbre (12) de moteur et ce planétaire et à commander la couronne (50) en un sens de rotation (C1) par l'accouplement (30) entre l'arbre (12) de moteur et ladite couronne pour obtenir un rapport de vitesse (V3) entre ledit arbre de moteur et le porte-satellites (58).

12. Véhicule automobile de type hybride comprenant un groupe motopropulseur avec un dispositif de transmission à variation de vitesse (14) selon l'une des revendications 1 à 8, **caractérisé en ce qu'**il comprend une machine électrique (22) raccordée électriquement à des accumulateurs électriques et dont le rotor (24) est relié à la voie de transmission de mouvement (102).

13. Véhicule automobile de type hybride selon la revendication 12, **caractérisé en ce que** la voie de transmission (102) comprend un actionneur (108; 210; 310, 318; 520; 714) porté à rotation par le rotor (24) et permettant de relier le rotor (24) de la machine (22) au train épicycloïdal (26) par une roue dentée (104) et/ou à l'essieu moteur (16) par une poulie dentée (106, 212, 312).

14. Véhicule automobile de type hybride selon la revendication 12 ou 13, **caractérisé en ce que** la voie de transmission (102) comprend un actionneur (318) porté à rotation par le rotor (324) et permettant de relier le rotor (24) de la machine (22) à l'essieu moteur (16) par un pignon étagé (328).

15. Véhicule automobile de type hybride selon l'une des revendications 12 à 14, **caractérisé en ce que** l'actionneur (108; 210; 310; 714) permet de relier le rotor (24) au porte-satellites (58) du train épicycloïdal (26).

16. Véhicule automobile de type hybride selon la revendication 12 ou 13, **caractérisé en ce que** l'actionneur (520) permet de relier le rotor (24) de la machine (22) à la couronne (50) du train épicycloïdal (26).

17. Véhicule automobile de type hybride selon l'une des revendications 12 à 16, **caractérisé en ce que** la voie de transmission (102) comprend un pignon baladeur (122) permettant de relier la roue dentée (104) au train épicycloïdal (26) et/ou à l'essieu moteur (16).

18. Véhicule automobile de type hybride selon la revendication 17 **caractérisé en ce que** le porte-satellites (58) du train épicycloïdal (26) porte une zone périphérique dentée (120) pour coopérer avec le pignon baladeur (122).

19. Véhicule automobile de type hybride selon l'une des revendications 12 à 18, **caractérisé en ce que** la voie de transmission (102) comprend un pignon (110) permettant de relier le plateau dentée (106) à l'essieu moteur (16).

20. Véhicule automobile de type hybride selon la revendications 19, **caractérisé en ce que** la voie de transmission (102) comprend un pignon (110) porté fixement par un fourreau (112) comportant une roue dentée (144) de transmission de rotation à l'essieu moteur (16).

21. Véhicule automobile de type hybride selon la revendication 20, **caractérisé en ce que** le fourreau (112) comporte une portée périphérique dentée (118) pour coopérer avec le pignon baladeur (122).

## Claims

1. A speed variation transmission device for a motor vehicle powertrain comprising an epicyclic gear train (26) with a sun gear (36) and a crown (50) connected to shaft (12) of thermal engine (10) of said vehicle, as well as a planet gear carrier (58) connected by a motion transmission track (102) to drive axle (16) of this vehicle, **characterized in that** sun gear (36) and crown (50) are connected each to engine shaft (12) by a controlled coupling (28, 30) and to a fixed part (48a, 48b) of the vehicle by a one-way coupling (32, 34).

2. A transmission device as claimed in claim 1, **characterized in that** the one-way coupling comprises a free wheel (32, 34).

3. A transmission device as claimed in any one of the previous claims, **characterized in that** the controlled coupling comprises a friction clutch (30) whose friction disk (86) is carried by engine shaft (12).

4. A transmission device as claimed in any one of the previous claims, **characterized in that** the controlled coupling comprises a friction clutch (28) whose friction disk (68) is carried by shaft (42) of sun gear (36).

5. A transmission device as claimed in any one of the previous claims, **characterized in that** the controlled coupling comprises a friction clutch (30) whose friction disk (86) is carried by shaft (56) of crown (50).

6. A transmission device as claimed in any one of the previous claims, **characterized in that** sun gear (36) is connected to fixed part (48a) of the vehicle by a one-way coupling (32) carried by a spindle (44, 244) extending from said sun gear (36).

7. A transmission device as claimed in any one of the previous claims, **characterized in that** sun gear (36) is connected to fixed part (48a) of the vehicle by a one-way coupling (32) carried by sun gear shaft (42).

8. A transmission device as claimed in any one of the previous claims, **characterized in that** crown (50) is connected to fixed part (48b) of the vehicle by a one-way coupling (34) carried by said crown.

9. A method of obtaining gear ratios using the transmission device as claimed in any one of the previous claims, **characterized in that** it consists in not allowing rotation of crown (50) in any of its two directions of rotation and in controlling sun gear (36) in a direction of rotation (P1) through coupling (28) between engine shaft (12) and said sun gear so as to obtain a gear ratio (VI) between said engine shaft and planet gear carrier (58).

10. A method as claimed in claim 9, **characterized in that** it consists in not allowing rotation of sun gear (36) in any of its two directions of rotation and in controlling crown (50) in a direction of rotation (C1) through coupling (30) between engine shaft (12) and said crown so as to obtain a gear ratio (V2) between said engine shaft and planet gear carrier (58).

11. A method as claimed in claim 9, **characterized in that** it consists in controlling sun gear (36) in a direction of rotation (P1) through coupling (28) between engine shaft (12) and this sun gear and in controlling crown (50) in a direction of rotation (C1) through coupling (30) between engine shaft (12) and said crown so as to obtain a gear ratio (V3) between said engine shaft and planet gear carrier (58).

12. A hybrid type motor vehicle comprising a powertrain with a speed variation transmission device (14) as claimed in any one of claims 1 to 8, **characterized in that** it comprises an electric machine (22) electrically connected to electric accumulators and whose rotor (24) is connected to motion transmission track (102).

13. A hybrid type motor vehicle as claimed in claim 12, **characterized in that** transmission track (102) comprises an actuator (108; 210; 310, 318; 520; 714) driven into rotation by rotor (24) and allowing to connect rotor (24) of machine (22) to epicyclic gear train (26) by a toothed wheel (104) and/or to drive axle (16) by a toothed pulley (106, 212, 312).

14. A hybrid type motor vehicle as claimed in claim 12 or 13, **characterized in that** transmission track (102) comprises an actuator (318) driven into rotation by rotor (324) and allowing to connect rotor (24) of machine (22) to drive axle (16) by a stepped pinion (328).

15. A hybrid type motor vehicle as claimed in any one of claims 12 to 14, **characterized in that** actuator (108; 210; 310; 714) allows to connect rotor (24) to planet gear carrier (58) of epicyclic gear train (26).

16. A hybrid type motor vehicle as claimed in claim 12 or 13, **characterized in that** actuator (520) allows to connect rotor (24) of machine (22) to crown (50) of epicyclic gear train (26).

17. A hybrid type motor vehicle as claimed in any ane of claims 12 to 16, **characterized in that** transmission track (102) comprises a sliding pinion (122) allowing to connect toothed wheel (104) to epicyclic gear train (26) and/or to drive axle (16).

18. A hybrid type motor vehicle as claimed in claim 17, **characterized in that** planet gear carrier (58) of epicyclic gear train (26) carries a toothed peripheral zone (120) for cooperation with sliding pinion (122).

19. A hybrid type motor vehicle as claimed in any one of claims 12 to 18, **characterized in that** transmission track (102) comprises a pinion (110) allowing to connect toothed plate (106) to drive axle (16).

20. A hybrid type motor vehicle as claimed in claim 19, **characterized in that** transmission track (102) comprises a pinion (110) fixedly carried by a sleeve (112) comprising a toothed wheel (144) for rotation transmission to drive axle (16).

21. A hybrid type motor vesicle as claimed in claim 20, **characterized in that** sleeve (112) comprises a toothed peripheral face (118) for cooperation with sliding pinion (122).

## Patentansprüche

1. Übertragungsvorrichtung mit Drehzahlvariation für Kraftfahrzeug-Antriebsaggregat, die einen Planetengetriebezug (26) mit einem Planetenrad (36) und einem Kranz (50) aufweist, die mit der Welle (12) des Verbrennungsmotors (10) des Fahrzeugs verbunden sind, sowie einen Planetenradträger (58), der durch einen Bewegungsübertragungsverlauf (102) mit der Antriebsachse (16) dieses Fahrzeugs verbunden ist, **dadurch gekennzeichnet, dass** das Planetenrad (36) und der Kranz (50) jeweils mit der Welle (12) des Motors durch eine Kupplung mit kontrollierter Steuerung (28, 30) und mit einem stationären Teil (48a, 48b) des Fahrzeugs durch eine Einrichtungskupplung (32, 34) verbunden sind.

2. Übertragungsvorrichtung nach Anspruch 1, **dadurch gekennzeichnet, dass** die Einrichtungskupplung ein freies Rad (32, 34) aufweist.

3. Übertragungsvorrichtung nach einem der vorhergehenden Ansprüche, **dadurch gekennzeichnet, dass** die Kupplung mit kontrollierter Steuerung eine Reibungskupplung (30), deren Reibungsscheibe (86) von der Welle (12) des Motors getragen wird, aufweist.

4. Übertragungsvorrichtung nach einem der vorhergehenden Ansprüche, **dadurch gekennzeichnet, dass** die Kupplung mit kontrollierter Steuerung eine Reibungskupplung (28) aufweist, deren Reibungsscheibe (86) von der Welle (42) des Planetenrads (36) getragen wird.

5. Übertragungsvorrichtung nach einem der vorhergehenden Ansprüche, **dadurch gekennzeichnet, dass** die Kupplung mit kontrollierter Steuerung eine Reibungskupplung (30) aufweist, deren Reibungsscheibe (86) von der Welle (56) des Kampfes (50) getragen wird.

6. Übertragungsvorrichtung nach einem der vorhergehenden Ansprüche, **dadurch gekennzeichnet, dass** das Planetenrad (36) mit dem stationären Teil (48a) des Fahrzeugs durch eine Einrichtungskupplung (32), die von einem Zapfen (44, 244), der aus dem Planetenrad (36) hervorgeht, getragen wird, verbunden ist.

7. Übertragungsvorrichtung nach einem der vorhergehenden Ansprüche, **dadurch gekennzeichnet, dass** das Planetenrad (36) mit dem stationären Teil (48a) des Fahrzeugs durch eine Einrichtungskupplung (32), die von der Welle (42) des Planetenrads getragen wird, verbunden ist.

8. Übertragungsvorrichtung nach einem der vorhergehenden Ansprüche, **dadurch gekennzeichnet, dass** der Kranz (50) mit dem stationären Teil (48b) des Fahrzeugs durch eine Einrichtungskupplung (34), die von dem Kranz getragen wird, verbunden ist.

9. Verfahren zum Erzielen von Gängen unter Einsatz der Übertragungsvorrichtung nach einem der vorhergehenden Ansprüche, **dadurch gekennzeichnet, dass** es darin besteht, die Drehung des Kranzes (50) in keine seiner zwei Drehrichtungen zu erlauben und das Planetenrad (36) in eine Drehrichtung (P1) durch die Kupplung (28) zwischen der Antriebswelle (12) und dem Planetenrad zu steuern, um einen Gang (V1) zwischen der Antriebswelle und dem Planetenradträger (58) zu erhalten.

10. Verfahren nach Anspruch 9, **dadurch gekennzeichnet, dass** es darin besteht, die Drehung des Planetenrads (36) in keine seiner zwei Drehrichtungen zu erlauben und den Kranz (50) in eine Drehrichtung (C1) durch die Kupplung (30) zwischen der Antriebswelle (12) und dem Kranz zu steuern, um einen Gang (V2) zwischen der Antriebswelle und dem Planetenradträger (58) zu erhalten.

11. Verfahren nach Anspruch 9, **dadurch gekennzeichnet, dass** es darin besteht, das Planetenrad (36) in eine Drehrichtung (P1) durch die Kupplung (28) zwischen der Antriebswelle (12) und diesem Planetenrad zu steuern und den Kranz (50) in eine Drehrichtung (C1) durch die Kupplung (30) zwischen der Antriebswelle (12) und dem Kranz zu steuern, um einen Gang (V3) zwischen der Antriebswelle und dem Planetenradträger (58) zu erhalten.

12. Kraftfahrzeug des hybriden Typs, das ein Antriebsaggregat mit einer Übertragungsvorrichtung mit Drehzahlvariation (14) nach einem der Ansprüche 1 bis 8 aufweist, **dadurch gekennzeichnet, dass** es eine Elektromaschine (22) aufweist, die elektrisch an elektrische Akkumulatoren angeschlossen ist, und dass der Rotor (24) mit dem Bewegungsübertragungsverlauf (102) verbunden ist.

13. Kraftfahrzeug des hybriden Typs nach Anspruch 12, **dadurch gekennzeichnet, dass** der Übertragungsverlauf (102) ein Stellorgan (108; 210; 310, 318; 520; 714) aufweist, das in Drehung von dem Rotor (24) getragen wird und es erlaubt, den Rotor (24) der Maschine (22) mit dem Planetengetriebezug (26) durch ein Zahnrad (104) und/oder mit der Antriebsachse (16) durch eine Zahnscheibe (106, 212, 312) zu verbinden.

14. Kraftfahrzeug des hybriden Typs nach Anspruch 12 oder 13, **dadurch gekennzeichnet, dass** der Übertragungsverlauf (102) ein Stellorgan (318) aufweist, das in Drehung von dem Rotor (324) getragen wird und es erlaubt, den Rotor (24) der Maschine (22) mit der Antriebsachse (16) durch ein Stufenrad (328) zu verbinden.

15. Kraftfahrzeug des hybriden Typs nach einem der Ansprüche 12 bis 14, **dadurch gekennzeichnet, dass** das Stellorgan (108; 210; 310; 714) es erlaubt, den Rotor (24) mit dem Satellitenradträger (58) des Planetengetriebezugs (26) zu verbinden.

16. Kraftfahrzeug des hybriden Typs nach Anspruch 12 oder 13, **dadurch gekennzeichnet, dass** das Stellorgan (520) es erlaubt, den Rotor (24) der Maschine (22) mit dem Kranz (50) des Planetengetriebezugs (26) zu verbinden.

17. Kraftfahrzeug des hybriden Typs nach einem der Ansprüche 12 bis 16, **dadurch gekennzeichnet, dass** der Übertragungsverlauf (102) ein Schieberad (122) aufweist, das es erlaubt, das Zahnrad (104) mit dem Planetengetriebezug (26) und/oder der Antriebsachse (16) zu verbinden.

18. Kraftfahrzeug des hybriden Typs nach Anspruch 17, **dadurch gekennzeichnet dass** der Planetenradträger (58) des Planetengetriebezugs (26) einen umfänglichen gezahnten Bereich (120) trägt, um mit dem Schieberad (122) zusammenzuwirken.

19. Kraftfahrzeug des hybriden Typs nach Anspruch 12 bis 18, **dadurch gekennzeichnet, dass** der Übertragungsverlauf (102) ein Ritzel (110) aufweist, das es erlaubt, das gezahnte Rad (106) mit der Antriebsachse (16) zu verbinden.

20. Kraftfahrzeug des hybriden Typs nach Anspruch 19, **dadurch gekennzeichnet, dass** der Übertragungsverlauf (102) ein Ritzel (110) aufweist, das von einer Hülse (112) stationär getragen wird, die ein Zahnrad (144) zum Übertragen von Drehung an die Antriebsachse (16) aufweist.

21. Kraftfahrzeug des hybriden Typs nach Anspruch 20, **dadurch gekennzeichnet, dass** die Hülse (112) eine umfängliche gezahnte Auflage (118) aufweist, um mit dem Schieberad (122) zusammenzuwirken.
